# DEMANDE DE BREVET EUROPEEN

(11) **EP 3 895 530 A1**
(43) Date de publication de la demande: **20.10.2021**
(21) Numéro de dépôt: 21020123.2
(22) Date de dépôt: 03.03.2021
(51) Int. Cl.: A01M 5/00, A01M 5/02, A01M 13/00

(54) **DISPOSITIF POUR NEUTRALISER OU DÉTRUIRE DES INSECTES DE TYPE FRELON ASIATIQUE OU SIMILAIRE AU NIVEAU DE LEUR NID**

(30) Priorité: 08.03.2020 FR 2002281
(71) Demandeur: Willaert, Lionel, 40130 Capobreton (FR)
(72) Inventeur: Willaert, Lionel, 40130 Capobreton (FR)

(57) **Abrégé**

Selon différentes caractéristiques de l'invention, l'invention a pour objet un dispositif pour neutraliser l'activité des insectes du nid de frelons asiatiques de façon mécanique et en supprimant l'accès à l'oxygène de l'insecte. L'invention comprend un dispositif d'accès mobile de transport type robot de petit format(vue1) avec un système de bras extensible/télescopique (vue 2) jusqu'à la hauteur du nid, un système de préhension articulé du nid de type grappin(vue 3) équipé d'un système de compression de type pneumatique grâce à la première membrane sécurisant l'intervention (vue 4) et mécanique du nid par la fermeture contrôlée du grappin (vue 3), une deuxième membrane (vue 5) assurant après sa fermeture la sécurité et l'étanchéité de la poche ainsi constituée (vue 5), un système de vidange au mieux de l'air ambiant de la poche (vue 5) remplacé par un gaz de qualité alimentaire arrêtant l'activité des insectes par leur neutralisation provisoire ou définitive suivant le temps d'exposition et la dose de gaz utilisée par suppression de l'oxygène. Le dispositif est de façon optionnelle complété d'un bras porte outil articulé multiaxes (vue 8) pour désolidariser le nid de son environnement à l'aide d'un outil scie de type sabre ou de type coupe tronçonneuse installé au niveau du système de préhension de type grappin qui lui-même peut être équipé de caméra de contrôle d'opérations.

## Description

DOMAINE TECHNIQUE DE L'INVENTION AUQUEL SE RAPPORTE L'INVENTION La présente invention concerne un dispositif pour protéger les abeilles, les polinisateurs et autres insectes de l'EEE (Espèce Exotique Envahissante Vespa Velutina Nigrithorax dit Frelon Asiatique). Le frelon asiatique est une des causes principales de mortalité des colonies d'abeilles en France. Ce dispositif est une contribution directe à la mise en œuvre du texte de loi 2016-1087 du huit aout 2016 pour la reconquête de la biodiversité, de la nature et des paysages. Les techniques de destruction utilisent habituellement des pièges mécaniques, chimiques, électriques, des appâts toxiques, ou encore des protections par cage grillagée. Ces formes de lutte se situent en proximité du rucher et sur la base des insectes en capture individu par individu. Il n'y a pas de prédateur naturel en France pour le frelon asiatique et plusieurs techniques de piégeage/élimination du frelon au pied du rucher avec des performances encore faibles et très variables sont étudiées mais aucune ne satisfait le monde scientifique (manque de sélectivité, efficacité ...). Lorsque la présence d'un nid de frelon asiatique est identifiée, la méthode actuelle de référence utilisée pour détruire des nids de frelons asiatiques est d'injecter un produit chimique (Pyrèthrine) dans le nid avec une action rapide mais qui a des effets délétères et rémanents dans la nature et présente un danger majeur entre autres pour les autres insectes et les oiseaux. Cette méthode a également un effet de pollution de l'eau et des sols. La capture/destruction de nids se fait en hauteur manuellement à l'aide en général de perches en fibre de carbone et se fait à l'aide d'équipements de protection (EPl) de sécurité pour pouvoir appliquer des produits chimiques létaux à l'aide de pulvérisateur ou poudreuse de produit chimique à des fins de destruction.

La présente invention se situe dans le domaine de la protection des abeilles, pollinisateurs et autres insectes contre le frelon asiatique en s'attaquant à son nid lorsqu'il est rempli de ses occupants et donc habituellement en début de soirée, en pleine nuit ou en fin de journée. On peut ainsi procéder à la neutralisation ou la destruction du nid de frelon asiatique dès lors qu'il est identifié dans la végétation. Plus de 80% des nids dits secondaires sont situés dans la canopée des arbres. La présente invention respecte complétement les autres espèces puisque l'invention est 100 % sélective car ciblée sur le nid du frelon asiatique, n'a pas d'effets secondaires sur son environnement, n'utilise pas de produit chimique et garantit pour un nid donné le résultat d'élimination du danger pour les abeilles, les pollinisateurs et les autres insectes. L'invention va permettre une capture en sécurité sans produit chimique, permettre une valorisation économique et scientifique des nids de frelons asiatiques et une évolution de la législation vers le non-usage de produit chimique pour la destruction des nids de frelon asiatique.

ART ANTERIEUR DE LA PUBLICATION FR3030190 est connu un dispositif pour la destruction par insecticide des insectes d'un nid de type frelon asiatique ou similaire .Ce dispositif présente comme principaux inconvénients le fait d'utiliser un insecticide ne protégeant pas l'environnement: la rémanence de l'insecticide et sa dispersion dans la nature sont considérés par les scientifiques comme étant responsables de la mortalité d'autres espèces non ciblées par l'action (autres hyménoptères et insectes, oiseaux, pollution de l'eau...). De plus la technique ne garantit pas que le projectile s'arrête à l'intérieur de la coque périphérique du nid à la fois pour des raisons de distance du tir et de qualité de précision liée à l'opérateur, l'invention ne donnant aucune information sur ces deux points. Par ailleurs l'invention amène souvent à laisser le nid en place pour des raisons techniques (difficulté d'accès) et économiques et ceci présente les inconvénients cités ci-dessus. Cette invention pour les nids non atteignables en destruction par toutes autres solutions offre une solution imparfaite et non recommandée sur un plan protection de l'environnement et incompatible pour la valorisation du nid. Le brevet FR 3030190 ne permet pas de valoriser les produits liés au nid et aux insectes occupants du nid de frelons asiatiques. DE LA PUBLICATION FR3080432 est connu un dispositif : appareil conçu pour être placé sur une branche d'arbre, avec une perche ou un drone, équipé d'un accessoire interchangeable. DE LA PUBLICATIOIN FR3025978 est connu un dispositif pour diminuer la population des frelons asiatiques. Bien que le brevet soit basé sur une réalité biologique de comportement du frelon asiatique (retour à son nid), ce dispositif présente comme principaux inconvénients que le brevet FR3025978 ne permet pas de garantir la totale destruction des individus d'un nid et garde une dangerosité pour l'environnement liée à l'usage d'insecticide non contrôlé dans sa dispersion. Par construction ; la localisation du nid de l'insecte équipé est et reste inconnue. Il n'est donc pas possible de mesurer l'efficacité de l'invention par rapport à sa destruction ou neutralisation. Il ne peut pas être établi que l'insecte équipé arrive à son nid car sa potentielle auto contamination par l'insecticide et sa mortalité naturelle durant les vols ne sont pas maitrisés. Il n'est pas établi que l'insecte équipé contamine la totalité des individus pour décimer la colonie, et que la quantité de produit insecticide nécessaire pour décimer un nid soit suffisante sous la forme adulte de l'insecte et n'affecte sans doute pas les individus à tous stades de développement du cycle de vie (œuf, larve, nymphe, imago, gynes, adulte) qui pour certains peuvent continuer leur développement. Par ailleurs le brevet met en œuvre un produit insecticide dont la mention (qui en modère l'impact) est faite comme étant un risque existant mais « faible » mais bien existant. Dans le résumé « son impact (l'insecticide) est très limité sur l'eau, la terre, et la flore ». De plus Le brevet FR3025978 ne permet pas de valoriser les produits liés au nid et aux insectes occupants du nid de frelon asiatique.

PROBLEME TECHNIQUE QUE L'INVENTION VISE A RESOUDRE. La présente invention vise donc à remédier à ces inconvénients et apporter des atouts nouveaux pour les apiculteurs et les désinsectiseurs. Plus particulièrement, la présente invention vise à prévoir: un dispositif nouveau d'accès à l'emplacement du nid, une solution sans produit chimique, une neutralisation ou destruction propres sur un plan environnemental et une capacité à valoriser les nids et son contenu à des fins économiques avec la création potentielle de nouveaux produits et marchés ainsi que de pouvoir fournir un matériel Vespa Velutina Nigrithorax aux différents stades du cycle de vie par le dosage non létal du gaz de neutralisation entre autres à destination des besoins scientifiques. Le dispositif selon l'invention est particulièrement destiné à la protection des colonies d'abeilles, les polinisateurs et autres insectes par la neutralisation ou la destruction des nids de frelons asiatiques qui se situent dans la canopée des arbres. Le dispositif n'est nullement limité aux modes de réalisation décrits et peut être transposé dans sa destination décrite et adapté à tout objet ou espèce vivante présentes en hauteur et qui nécessitent une manipulation délicate et maitrisée pour le ramener au sol ou pour y apporter une intervention ou pour installer un objet en hauteur ou dans des atmosphères dont il faut protéger l'objet à manipuler.

DESCRIPTION DE L'INVENTION La présente invention concerne un dispositif destiné à agripper en hauteur et dans un environnement végétal un nid de frelons asiatique ou un autre objet de même nature à l'aide d'une pince de type grappin (3) comprenant de 3 à 5 doigts disposant d'un mécanisme de fermeture enserrant le nid à prélever caractérisé en ce que le grappin de préhension est rendu solidaire du nid de frelon asiatique et est rendu étanche à l'aide de deux membranes. Le grappin (3) est équipé, pour sa fermeture étanche, d'une première membrane équipée d'un système de gonflage (4) enserrant complètement le nid de telle sorte que le nid soit stabilisé dans la mâchoire fermée le gonflage se faisant après fermeture des doigts de la mâchoire. (3). Le grappin exerce une force suffisante de retenue du nid lors de la fermeture étanche du grappin, encapsulant les insectes après fermeture du grappin pour procéder à l'enlèvement du nid de son support végétal par arrachement ou par découpe des fixations au végétal. Le dispositif met en sécurité l'opérateur et protège globalement la structure du nid. Une deuxième membrane (poche 5) tapissant l'intérieur de la première membrane, est au contact du nid et est étanche à l'air et aux gaz injectés. Cette deuxième membrane étanche intérieure (5) positionnée à l'intérieur de la première membrane (4) dépasse du grappin du côté doigts d'ouverture du grappin. Ceci permet une fermeture physique de type lien de la membrane « poche » intérieure (5) pour constituer l'enceinte étanche fermée qui a des propriétés de résistance au percement par les piqures des insectes, de barrière à l'air et aux gaz de neutralisation (anesthésie ou dose létale) utilisés. Le nid est ainsi encapsulé dans une enveloppe étanche « poche » (5) et qui est soumise à une bonne vidange de l'air présent dans la poche de façon mécanique ou autre. Le grappin est rendu mobile par des moyens adaptés de robot (1) de telle sorte que celui-ci puisse se positionner en proximité du nid à agripper à l'aide d'un mât télescopique (2) équipé d'un bras multiaxe (6) piloté à distance (7) et ainsi neutraliser le nid à l'aide du gaz de préférence de qualité alimentaire et sans produit chimique. Un robot de petit format (1) piloté à distance (7) permet de venir le positionner à peu près à la verticale du nid nommé lieu d'intervention et transportant les différentes composantes de la solution entre autres : mât télescopique, grappin, outils pour la vidange d'air et pour la compression des ballons gonflables, réservoir gaz, poches étanches, contenants de stockage des nids et de leurs composants. Le robot est équipé d'un mât télescopique de type électrique ou autre (2) positionné au repos à l'horizontale. Il est érigé à l'aide de vis crémaillère manuelle ou automatisée ou autre (hydraulique ou pneumatique...) à la verticale du nid objet de l'intervention. La tête de mât est équipée soit d'une plateforme articulée multiaxes (6) portant le grappin (3) ou d'un grappin qui est lui-même multiaxes et permettant de positionner celui-ci pour assurer les interventions citées. L'ensemble est piloté à distance de sécurité du nid à l'aide de télécommandes (7) le tout pouvant être assisté par une ou plusieurs caméras d'observation (non représentée) installées en proximité ou sur le grappin pour en améliorer la performance et d'un bras porte outil articulé multiaxes (8) commandé du sol équipé d'un outil scie de type sabre ou de type coupe tronçonneuse pour désolidariser le nid de son environnement végétal. Le dispositif de l'invention est de préférence conçu sur la base d'un robot à chenilles ou à roues de type tout terrain (1) avec un bras extensible/télescopique de format du type de 3 à 20 mètres (2), un système de préhension/compression acceptant un format de nid du type de 100/120 cm de diamètre, avec une membrane et une « poche » étanches du type de 200 à 1000 litres et des gaz de type gaz carbonique ou azote alimentaires permettant de procéder à des formes de neutralisation sans dose létale ou avec dose létale (anesthésie ou dose létale) et de conservation ultérieures à des fins d'usage alimentaires, médicinales, pharmaceutiques ou cosmétiques des différents stades de développement du cycle de vie de l'insecte (œuf, larve, nymphe, imago, gynes, adulte) présents dans le nid au moment de l'usage de l'invention ainsi que de pouvoir procéder à l'usage de la coque et de la structure du nid à des fins d'exploitation économiques de toute nature.

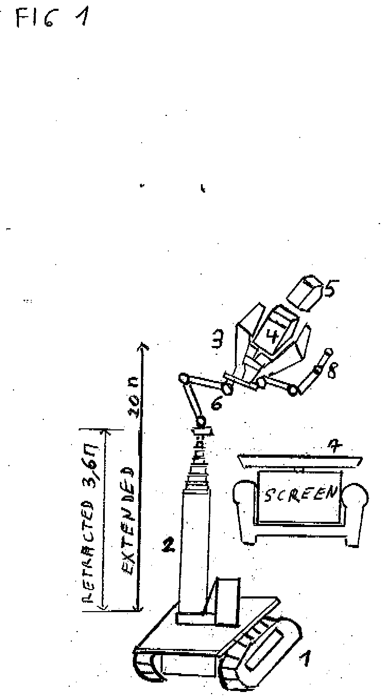

BREVE DESCRIPTION DES DESSINS D'autres caractéristiques et avantages de l'invention apparaîtront à la lecture de la description détaillée qui suit pour la compréhension de laquelle on se reportera aux dessins annexés. La figure 1 [Fig 1] est une représentation schématique du dispositif global de l'invention et qui contient les élèments correspondant aux composantes listées ci-dessous. 1 Représentation du robot tout terrain. 2 Représentation du dispositif de mât télescopique. 3 Représentation du dispositif de grappin de préhension. 4 et 5 Représentation des membranes étanches avec le système de gonflage (ici boudin gonflable) et « poche » étanche a l'air et au gaz. 6 Représentation du bras articulé robotisé. 7 Représentation de la télécommande de l'ensemble. 8 Représentation du bras porte outil robotisé

## Revendications

1. Dispositif destiné à agripper en hauteur et dans un environnement végétal un objet à l'aide d'une pince de type grappin comprenant de 3 à 5 doigts disposant d'un mécanisme de fermeture enserrant le nid à prélever **caractérisé en ce que** le grappin (3) de préhension comprend deux membranes de sorte à le rendre solidaire du nid lesdites deux membranes consistant en une première membrane souple intérieure (4) au grappin qui dispose d'un système de gonflage de cette première membrane, le grappin exerçant une force suffisante de retenue du nid lors de la fermeture étanche du grappin qui est solidarisé au nid encapsulant ainsi les insectes, une deuxième membrane intérieure (5) qui tapisse la première membrane par sa face intérieure, l'autre face de ladite deuxième membrane étant au contact du nid et ladite deuxième membrane étant étanche aux gaz et à l'air, le grappin étant fixé sur des moyens de robot (1) doté d'un mât télescopique(2) équipé d'un bras multiaxe(6) piloté à distance(7) de telle sorte que ledit grappin, rendu mobile, puisse se positionner autour du nid à agripper, neutralisant les insectes du nid à l'aide du gaz de qualité de préférence alimentaire et sans produit chimique.

2. Dispositif selon la revendication 1 **caractérisé en ce que** le grappin (3) est équipé, pour sa fermeture étanche, d'une première membrane équipée d'un système gonflable (ici boudins gonflables) (4) enserrant complètement le nid de telle sorte que le nid soit stabilisé dans la mâchoire fermée, le gonflage des boudins se faisant après fermeture des doigts de la mâchoire (3).

3. Dispositif selon l'une quelconque des revendications précédentes **caractérisé en ce que** ladite deuxième membrane étanche intérieure (5) positionnée à l'intérieur de la première membrane (4) dépasse du grappin du côté doigts d'ouverture du grapppin, de sorte à permettre une fermeture physique de type lien de la membrane « poche » intérieure (5) pour constituer l'enceinte étanche fermée.

4. Dispositif selon l'une quelconque des revendications précédentes **caractérisé en ce que** ledit robot transporte le mât télescopique, le grappin, les outils pour la vidange d'air et pour la compression des ballons gonflables, le réservoir de gaz, les poches étanches, les contenants de stockage des nids et de leurs composants, ledit mât télescopique étant de type électrique ou autre (2) positionné au repos à l'horizontale, ledit mât étant doté de vis crémaillère ou automatisée ou autre hydraulique ou pneumatique de façon à l'ériger à la verticale du nid, la tête dudit mât étant équipée soit d'une plateforme articulée multiaxes(6) portant le grappin(3) ou d'un grappin qui est lui-même multiaxes et permettant de le positionner pour assurer les interventions.

5. Dispositif selon l'une quelconque des revendications précédentes **caractérisé en ce qu'**il comprend des moyens de pilotage à distance (7) du robot (1) de type télécommandes, de sorte à venir le positionner à peu près à la verticale du nid, l'ensemble pouvant être assisté par une ou plusieurs caméras d'observation (non représentée) installées en proximité ou sur le grappin.

6. Dispositif selon l'une quelconque des revendications précédentes **caractérisé en ce que** la tête de mât ou autre lieu de proximité du grappin est en outre équipée d'un bras porte outil articulé multiaxes (8) commandé du sol équipé d'un outil scie de type sabre ou de type coupe tronçonneuse pour désolidariser le nid de son environnement végétal.

7. Utilisation du dispositif selon l'une quelconque des revendications 1 à 6 **caractérisé en ce que**, lorsque l'enveloppe étanche «poche» (5) encapsule les insectes, ladite poche est soumise à une vidange de l'air présent dans la poche de façon mécanique ou autre.

8. Utilisation selon la revendication 7, **caractérisé en ce qu'**après fermeture étanche de la « poche » (5) il est procédé à l'injection d'un gaz, de préférence le gaz carbonique (Dioxyde de carbone) ou l'azote, aux normes de préférence alimentaires en quantité adaptée en termes de dose et de durée d'exposition pour atteindre une neutralisation provisoire des insectes ou une destruction des insectes en fonction de la cible d'usage du nid prévue.

9. Utilisation selon la revendication 7 ou 8 **caractérisé en ce qu'**après fermeture étanche du grappin qui est solidarisé au nid encapsulant les insectes, le nid est enlevé de son support végétal par arrachement ou par découpe des fixations végétales le tout de façon sécurisée et en protégeant globalement la structure du nid.
